# EUROPEAN PATENT SPECIFICATION

(11) **EP 1 710 217 B1**
(45) Date of publication and mention of the grant of the patent: **30.03.2016**
(21) Application number: 06114464.8
(22) Date of filing: 04.05.2000
(51) Int. Cl.: C04B 35/58, H05B 3/14, C22C 29/18, B22F 3/105

(54) **Electrical resistance element**
Elektrisches Widerstandselement
Elément de résistance électrique

(30) Priority: 20.05.1999 SE 9901827
(43) Date of publication of application: 11.10.2006
(62) Divisional of application: 00931806.4
(73) Proprietor: Sandvik Intellectual Property AB, 811 81 Sandviken (SE)
(72) Inventor: Sundberg, Mats, 722 46 Västerås (SE)
(74) Representative: Setréus, Ellen

(56) References cited:
- EP-A- 0 737 985
- GB-A- 731 616
- GB-A- 899 464
- GB-A- 924 497
- US-A- 3 269 806

## Description

The present invention relates to a new electrical resistance-heating element of molybdenum silicide type intended to use in connection with sintering of metal powder.

Resistance-heating elements of the above-mentioned kind are existing since the 1950ies for instance with the trademark Kanthal Super. These consist usually mainly of a metal like phase of MoSi₂, alternatively of MoₓW₁₋ₓSi₂ and also an oxide phase of type aluminum silicate. Similar types of material can be used at element temperatures up to 1900°C in oxidizing atmosphere. GB 924 497 describes such an element consisting of a silicide phase according to the formula Mo (Si₁₋ₓAlₓ)₂.

What makes this high working temperature possible for these materials is, besides the high melting point of the material (over 2000°C), the oxide layer of SiO₂, which will be formed and rapidly makes the basic material passive against accelerating oxidation and by this makes a long service time for the heating element possible. This outer layer gives a lasting protection in several furnace- and heat treating atmospheres, as air, oxygen, nitrogen/ hydrogen gas, cracked ammonia, and others. Conditions that often limit the use in these atmospheres are, when a high temperature of the element is prevailing simultaneous with a too low potential of oxygen, alternatively dew point, in the atmosphere. What happens if the critical proportions between dew point - temperature of the element is exceeded is, that the SiO₂-layer becomes unstable and by that after a certain time does not give any protection of the base material. For instance in hydrogen gas this occurs at an element temperature of 1300°C when the dew point is lower than about -30°C. To keep the SiO₂-layer remaining stable at a temperature of the element of 1450°C, a dew point over +20°C is required, i.e. a hydrogen gas containing more than 2.3 percent by volume. The stability properties of the SiO₂-layer make up a restriction of the usage of the element in certain connections.

An application example where such limitation manifests itself is at sintering of metal powder in order to produce stainless steel. Components of the stainless steel grade AISI316L are above all produced by pressing of powder, alternatively by injection moulding of metal powder. After evaporation of the binding agent at a low temperature often a final sintering in the range of temperature between 1300-1360°C in reduced atmosphere is required. The reducing gas can be pure hydrogen gas with a dew point at -40°C to -60°C, corresponding about 0.01 and 0.001 percent by volume of water respectively. The low dew point has to be obtained in order to reduce metal oxides during sintering process and by that resulting in that a material with high density and good mechanical properties. In such an application example an element temperature between 1400 and 1550°C should be required, dependent on the element shape and furnace design. Under those conditions the SiO₂-layer is consequently not stable on heating elements based on MoSi₂.

Heating elements which are used today in many furnaces for sintering of metal powder in the temperature range over 1250-1300°C are manufactured of above all molybdenum, but also of tungsten. A limitation of this material is, besides its relatively high total cost in furnaces, the requirement to hold the elements under all circumstances over 400°C in an atmosphere deficient in oxygen to avoid, that detrimental oxidation of the pure molybdenum metal occurs. For example at leakage of furnaces or other breakdowns those elements can consequently be damaged.

The alternative materials, which exist for electrical resistance heating under these conditions, are alloys and intermetallic compounds as FeCrAl, NiCr and MoSi₂ (e.g. Kanthal Super as above). The limitations of MoSi₂-material were described above. FeCrAl and NiCr form oxides of Al₂O₃ and Cr₂O₃ respectively on the surface under use in air. In reducing atmosphere, as dry hydrogen gas, the range of temperature under use is limited to about 1400°C for FeCrAl and 1250°C for for example NiCr of the trademark Nicrothal 80 respectively.
In case of NiCr-alloys the Cr₂O₃ is not stable above this temperature. In case of FeCrAl the Al₂O₃-layer certainly remains stable, but the service time of the material at this temperature is limited by the closely allied smelting temperature of about 1500°C. Thus, if the FeCrAl should be used for sintering of 316L, the requirements for high element temperatures would lead to very limited service times.

It would be desirable to use a material that combines the possibility to form alumina on the surface with a melting temperature considerable higher than 1500°C and by that, if necessary alternating could be used in reducing and oxidizing atmosphere. Besides, then the disadvantages of the molybdenum elements could be eliminated since the elements not always have to be used in an atmosphere deficient in oxygen.

It has surprisingly been shown, that by alloying MoSi₂ with W and Al in a sufficient quantity and also an alumina phase, a phase of molybdenum tungsten alumina silicide, Mo_{1-y}W_{y}(Si₁₋ₓAlₓ)₂ is obtained, which is stable in dry hydrogen gas at high temperatures. The Al₂O₃ formed on the surface of the element is stable i reducing environments while SiO₂ is not, so that an element made of this material shows no corrosion at high temperatures, which the material of GB 924 497 would do in reducing environments.

GB 924 497 describes a resistance element to be operated in oxidizing atmosphere, which is contrary to the present invention, which also means that it is an aim to prevent aluminium atoms to react with silica of the binding means of that material while forming aluminium oxide and silicon. Alumina is in the element of that document merely used for binding means and accordingly distributed inside the bulk of the material providing no protection against corrosion.

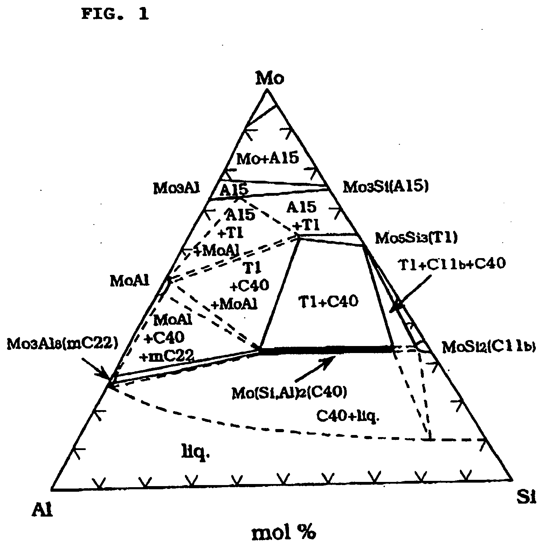

Herewith y should amount to a numerical value in the range of 0-0.4, preferably 0.05-0.20. Substitution of Mo with W can be done with maintained crystal structure, C11, and thereby increase the service temperature of the heating element with the composition Mo_{1-y}W_{y}Si₂. This is applied for instance for heating elements with the trademark Kantahl Super 1900, which in similarity with Kanthal Super 1800 form SiO₂ on the surface. Analogous the C-40-phase will be formed even at alloying of the aluminum at the substitution of molybdenum with tungsten according to Mo_{1-y}W_{y}Si₁₋ₓAlₓ. The remaining phases, which can be formed at high x-values in the system Mo-Si-Al are for example aluminides of molybdenum, which appears from the phase diagram Figure 1, valid at 1823 K.

Under experimental work in connection with the present invention it was proved suitable, that the silicide phase amounts to between 65 and 95 percent by weight of the total weight of the resistance element, preferably between 75 and 85 percent by weight.

As mentioned above, the resistance element contains besides the silicide phase alumina too.
The balance can consist of SiO₂, suitably between 0 and 1 percent by weight.

The above-described invention could also be used in other sintering applications, where low oxygen potential, alternatively a low dew point, is required. This is sometimes the case at sintering of powder of tungsten heavy alloy, certain types of alloys of titanium and intermetallic compounds, and also of low alloyed steels. For instance the heavy alloy W-Cu have been sintered in hydrogen at 1400°C with a dew point at -36°C.

The above mentioned formed alumina is expected to be stable up to about 1595°C, which is the eutectic temperature in the system SiO₂-3Al₂O₃·2SiO₂ (mullite). This oxide is expected to have different corrosion properties than the pure alumina. Up to at least the temperature of the element of around 1595°C could thereby this material constitute a general alternative to the heating elements of molybdenum-type.

## Claims

1. Use of an electrical resistance element for sintering of metal powder in particular, in sintering furnaces of low oxygen potential or low dew point atmospheres, wherein said electrical resistance element mainly consists of a silicide phase and wherein Mo is partly substituted by W for forming a silicide phase according to the formula Mo_{1-y}W_{y}(Si₁₋ₓAlₓ)₂, which phase forms alumina on the surface of the element and wherein x amounts to between 0.10 and 0.60; y amounts to between 0 and 0.40; and the silicide phase amounts to between 65 and 95 percent by weight of the total weight of the resistance element whereby the element contains besides the mentioned silicide phase 0 to 40 percent by volume of Al₂O₃.

2. Use of an electrical resistance element according to claim 1, **characterized in, that** x amounts between 0.20 and 0.55.

3. Use of an electrical resistance element according to claim 2, **characterized in, that** y amounts between 0.05 and 0.20.

4. Use of an electrical resistance element according to any of preceding claims, **cha racterized in,** that the silicide phase amounts to between 75 and 85 percent by weight.

5. Use of an electrical resistance element according to any of the preceding claims, **c haracterized** in, that the element contains besides the mentioned silicide phase 10 to 20 percent by volume Al₂O₃.

6. Use of an electrical resistance element according to any of the preceding claims, **c haracterized** in, that the element contains a balance of SiO₂ besides the mentioned silicide phase and prospective Al₂O₃.

7. Use of an electrical resistance element according to any of the preceding claims for sintering a metal powder which is is of type iron-based alloys.

8. Use of an electrical resistance element according to claim 8, **characterized in, that** the alloy is a stainless steel.

9. Use of an electrical resistance element according to claim 8, **characterized in, that** the designation of the alloy is AISI316L.

10. Use of an electrical resistance element according to any of the preceding claims for other sintering applications where low oxygen potential or a low dew point is required.

11. Method of sintering a metal powder as in claim 1, whereby as a source of heat is a heating element, said electrical resistance element mainly consists of a silicide phase and wherein Mo is partly substituted by W for forming a silicide phase according to the formula Mo_{1-y}W_{y}(Si₁₋ₓAlₓ)₂, which phase forms alumina on the surface of the element and wherein x amounts to between 0.10 and 0.60; y amounts to between 0 and 0.40; and the silicide phase amounts to between 65 and 95 percent by weight of the total weight of the resistance element and said element contains besides the mentioned silicide phase 0 to 40 percent by volume of Al₂O₃.

12. Method according to claim 11, **characterized in, that** x amounts to a value between 0.20 and 0.55.

13. Method according to any of claims 11-12, **characterized in, that** the heating element contains above the silicide phase even Al₂O₃ in an amount between 10 and 20 percent by volume.

14. Method according to any of claims 11-13, **characterized in, that** it applies at sintering of iron-based powder, preferably stainless steel.

15. Method according to any of claims 11-13, **characterized in that** that it applies at sintering applications where low oxygen potential or a low dew point is required.

## Patentansprüche

1. Verwendung eines elektrischen Widerstandselementes zum Sintern von Metallpulver, insbesondere in Sinteröfen mit Atmosphären mit niedrigem Sauerstoffpotenzial oder niedrigem Taupunkt, wobei das elektrische Widerstandselement hauptsächlich aus einer Silicid-Phase besteht und wobei Mo teilweise durch W ersetzt ist, um eine Silicid-Phase gemäß der Formel Mo_{1-y}W_{y}(Si₁₋ₓAlₓ)₂ zu bilden, wobei diese Phase auf der Oberfläche des Elementes Aluminiumoxid bildet und wobei x zwischen 0,10 und 0,60 beträgt, y zwischen 0 und 0,40 beträgt, und die Silicid-Phase zwischen 65 und 95 Gew.-% des Gesamtgewichtes des Widerstandselementes beträgt, wobei das Element außer der erwähnten Silicid-Phase 0 bis 40 Vol.-% Al₂O₃ enthält.

2. Verwendung eines elektrischen Widerstandselementes nach Anspruch 1, **dadurch gekennzeichnet, dass** x zwischen 0,20 und 0,55 beträgt.

3. Verwendung eines elektrischen Widerstandselementes nach Anspruch 2, **dadurch gekennzeichnet, dass** y zwischen 0,05 und 0,20 beträgt.

4. Verwendung eines elektrischen Widerstandselementes nach einem der vorstehenden Ansprüche, **dadurch gekennzeichnet, dass** die Silicid-Phase zwischen 75 und 85 Gew.-% beträgt.

5. Verwendung eines elektrischen Widerstandselementes nach einem der vorstehenden Ansprüche, **dadurch gekennzeichnet, dass** das Element neben der erwähnten Silicid-Phase 10 bis 20 Vol.-% Al₂O₃ enthält.

6. Verwendung eines elektrischen Widerstandselementes nach einem der vorstehenden Ansprüche, **dadurch gekennzeichnet, dass** das Element neben der erwähnten Silicid-Phase und zu erwartendem Al₂O₃ als Restbestandteil SiO₂ enthält.

7. Verwendung eines elektrischen Widerstandselementes nach einem der vorstehenden Ansprüche zum Sintern eines Metallpulvers, welches vom Typ der Legierungen auf Eisenbasis ist.

8. Verwendung eines elektrischen Widerstandselementes nach Anspruch 8, **dadurch gekennzeichnet, dass** die Legierung Edelstahl ist.

9. Verwendung eines elektrischen Widerstandselementes nach Anspruch 8, **dadurch gekennzeichnet, dass** die Legierungsbezeichnung AISI316L ist.

10. Verwendung eines elektrischen Widerstandselementes nach einem der vorstehenden Ansprüche für andere Sinteranwendungen, bei welchen ein niedriges Sauerstoffpotenzial oder ein niedriger Taupunkt erforderlich ist.

11. Verfahren zum Sintern eines Metallpulvers, insbesondere in Sinteröfen mit Atmosphären mit niedrigem Sauerstoffpotenzial oder niedrigem Taupunkt, wobei als eine Wärmequelle ein Heizelement dient, wobei das elektrische Widerstandselement hauptsächlich aus einer Silicid-Phase besteht und wobei Mo teilweise durch W ersetzt ist, um eine Silicid-Phase gemäß der Formel Mo_{1-y}W_{y}(Si₁₋ₓAlₓ)₂ zu bilden, wobei diese Phase an der Oberfläche des Elementes Aluminiumoxid bildet und wobei x zwischen 0,10 und 0,60 beträgt, y zwischen 0 und 0,40 beträgt, und die Silicid-Phase zwischen 65 und 95 Gew.-% des Gesamtgewichtes des Widerstandselementes beträgt und das Element außer der erwähnten Silicid-Phase 0 bis 40 Vol.-% Al₂O₃ enthält.

12. Verfahren nach Anspruch 11, **dadurch gekennzeichnet, dass** x zwischen einem Wert von 0,20 und 0,55 liegt.

13. Verfahren nach einem der Ansprüche 11 oder 12, **dadurch gekennzeichnet, dass** das Heizelement über der Silicid-Phase gleichmäßiges Al₂O₃ in einer Menge zwischen 10 und 20 Vol.-% enthält.

14. Verfahren nach einem der Ansprüche 11-13, **dadurch gekennzeichnet, dass** es beim Sintern von eisenbasiertem Pulver, insbesondere rostfreiem Stahl, angewendet wird.

15. Verfahren nach einem der Ansprüche 11-13, **dadurch gekennzeichnet, dass** es bei Sinteranwendungen zur Anwendung kommt, bei welchen ein niedriges Sauerstoffpotenzial oder ein niedriger Taupunkt erforderlich ist.

## Revendications

1. Utilisation d'un élément de résistance électrique pour fritter une poudre métallique, en particulier dans des fours de frittage à faible potentiel d'oxygène ou à atmosphères à bas point de rosée, dans laquelle ledit élément de résistance consiste principalement en une phase de siliciure et dans laquelle Mo est remplacé partiellement par W pour former une phase de siliciure selon la formule Mo_{1-y}W_{y}(Si₁₋ₓAlₓ)₂, laquelle phase forme de l'alumine sur la surface de l'élément et dans laquelle x vaut entre 0,10 et 0,60, y vaut entre 0 et 0,40, et la phase de siliciure correspond à entre 65 et 95 pour cent en poids du poids total de l'élément de résistance grâce à quoi l'élément contient en plus de la phase de siliciure mentionnée de 0 à 40 pour cent en volume de Al₂O₃.

2. Utilisation d'un élément de résistance électrique selon la revendication 1, **caractérisée en ce que** x vaut entre 0,20 et 0,55.

3. Utilisation d'un élément de résistance électrique selon la revendication 2, **caractérisée en ce que** y vaut entre 0,05 et 0,20.

4. Utilisation d'un élément de résistance électrique selon l'une quelconque des revendications précédentes, **caractérisée en ce que** la phase de siliciure correspond à entre 75 et 85 pour cent en poids.

5. Utilisation d'un élément de résistance électrique selon l'une quelconque des revendications précédentes, **caractérisée en ce que** l'élément contient en plus de la phase de siliciure mentionnée 10 à 20 pour cent en volume de Al₂O₃.

6. Utilisation d'un élément de résistance électrique selon l'une quelconque des revendications précédentes, **caractérisée en ce que** l'élément contient un complément de SiO₂ en plus de la phase de siliciure mentionnée et du Al₂O₃ prospectif.

7. Utilisation d'un élément de résistance électrique selon l'une quelconque des revendications précédentes pour fritter une poudre métallique qui est du type des alliages à base de fer.

8. Utilisation d'un élément de résistance électrique selon la revendication 8, **caractérisée en ce que** l'alliage est un acier inoxydable.

9. Utilisation d'un élément de résistance électrique selon la revendication 8, **caractérisée en ce que** la désignation de l'alliage est AISI316L.

10. Utilisation d'un élément de résistance électrique selon l'une quelconque des revendications précédentes pour d'autres applications de frittage où un faible potentiel d'oxygène ou un bas point de rosée est nécessaire.

11. Procédé de frittage d'une poudre métallique selon la revendication 1, grâce auquel lorsqu'une source de chaleur est un élément chauffant, ledit élément de résistance électrique consiste en une phase de siliciure et dans lequel Mo est partiellement remplacé par W pour former une phase de siliciure selon la formule Mo_{1-y}W_{y}(Si₁₋ₓAlₓ)₂, laquelle phase forme de l'alumine sur la surface de l'élément et dans lequel x vaut entre 0,10 et 0,60, y vaut entre 0 et 0,40, et la phase de siliciure correspond à entre 65 et 95 pour cent en poids du poids total de l'élément de résistance et ledit élément contient en plus de la phase de siliciure mentionnée de 0 à 40 pour cent en volume de Al₂O₃.

12. Procédé selon la revendication 11, **caractérisé en ce que** x correspond à une valeur entre 0,20 et 0,55.

13. Procédé selon l'une quelconque des revendications 11 et 12, **caractérisé en ce que** l'élément chauffant contient en plus de la phase de siliciure du Al₂O₃ suivant une quantité entre 10 et 20 pour cent en volume.

14. Procédé selon l'une quelconque des revendications 11 à 13, **caractérisé en ce qu'**il s'applique au frittage de poudre à base de fer, de préférence un acier inoxydable.

15. Procédé selon l'une quelconque des revendications 11 à 13, **caractérisé en ce qu'**il s'applique à des applications de frittage où un faible potentiel d'oxygène ou un bas point de rosée est nécessaire.
